# EUROPEAN PATENT APPLICATION

(11) **EP 4 738 840 A1**
(43) Date of publication of application: **06.05.2026**
(21) Application number: 24306857.4
(22) Date of filing: 04.11.2024
(51) Int. Cl.: H04N 21/234, H04N 21/44

(54) **EXTERNAL DATA IN AVATAR REPRESENTATION FORMATS**

(71) Applicant: InterDigital CE Patent Holdings, SAS, 75017 Paris (FR)
(72) Inventor: GOSSELIN, Philippe Henri, 35235 THORIGNE-FOUILLARD (FR); COVA REGATEIRO, João Pedro, 35220 CHATEAUBOURG (FR); AVRIL, Quentin, 35830 BETTON (FR)
(74) Representative: Vossius & Partner Patentanwälte Rechtsanwälte mbB

(57) **Abstract**

Systems, methods, and instrumentalities are disclosed related to external data in avatar representation formats. In examples, a decoding/encoding device may include a processor. The device may be configured to determine that a data file comprises a plurality of data components. The device may determine that a data component of the plurality of data components is associated with a first data format that an application does not support. The device may obtain a link to access an external data content associated with a second data format that the application supports. The device may obtain external data of the external data content using the link. The device may decode the external data.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed related to external data in avatar representation formats. In examples a decoder may include a processor. The device may be configured to determine that a data file comprises a plurality of data components. The device may determine a data component of the plurality of data components is associated with a first data format that an application does not support. The device may obtain a link to access external data content (e.g., an external data file) associated with a second data format that the application supports. The device may obtain external data of the external data content using the link. The device may decode the external data.

In examples a device may include a processor. The device may be configured to determine that a data file comprises a plurality of data components. The device may determine a data component of the plurality of data components is associated with a first data format that an application does not support. The device may send a link to access an external data content associated with a second data format that the application supports.

The device may include one or more features. For example, the external data content may include the external data. The external data content may include the external data. The external data may be a subset of data associated with the external data content. The device may obtain a property indicating the external data that is to be decoded. The external data may be obtained based on the property. The external data may be first external data of the external data content. The device may skip decoding of a second external data that is not indicated by the property. The external data content may include the second external data. The property may be a path property associated with a scene of an avatar representation. In examples, the property may be a path property that identifies a subset of the external data content as a path pointing to (e.g., into) the structure of a file. The property may be a path property associated with avatar data, wherein the avatar data may be associated with a scene representation. The device may parse an include-children property of the avatar representation to identify descendants associated with the external data indicated by the path property.

The external data may be in a JavaScript Object Notation (JSON) format, and/or the path property may be parsed based on JSON parsing. The device may receive a list of external formats that the application is required to support or a list of external formats that are usable by the application. The first data format or the second data format may be a non-graphics library transmission format (gITF). The first data format may be a glTF and/or the second data format may be a non gITF. The first data format may be a non glTF and/or the second data format may be a gITF. In examples, the first data format and/or the second data format may be a AJIF, MARF, gITF, VRML, FBX, USD and/or the like. The linked data (e.g., first data or external data) may be a (e.g., any) 3D scene format (e.g., gITF, FBX, USD, ply, OBJ, xyz, 3DS, Maya, Blender, Unreal, Unity, Godot, and/or the like). The data file may be associated with an avatar representation, the data component may be associated with a feature of the avatar representation, and/or the external data may be decoded to generate the feature of the avatar representation.

In examples, a method may include determining that a data file includes a plurality of data components. The method may include determining a data component of the plurality of data components is associated with a first data format that an application does not support. The method may include obtaining a link to access an external data content associated with a second data format that the application supports. The method may include obtaining external data of the external data content using the link. The method may include decoding the external data.

In examples, a method may include determining that a data file comprises a plurality of data components. The method may include determining that a data component of the plurality of data components is associated with a first data format that an application does not support. The method may include sending a link to access an external data content associated with a second data format that the application supports. In examples, the external data content may include the external data.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 is a flow diagram illustrating an example of the beginning of starting to parse an AJIF file.
FIG. 5 is a flow diagram illustrating an example of the beginning of parsing data for an AJIF file.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

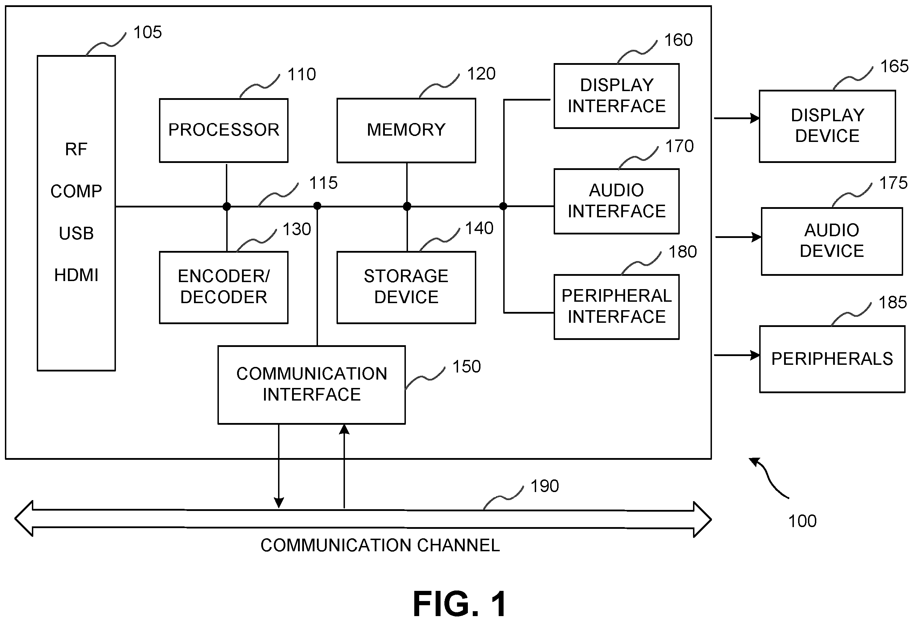

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

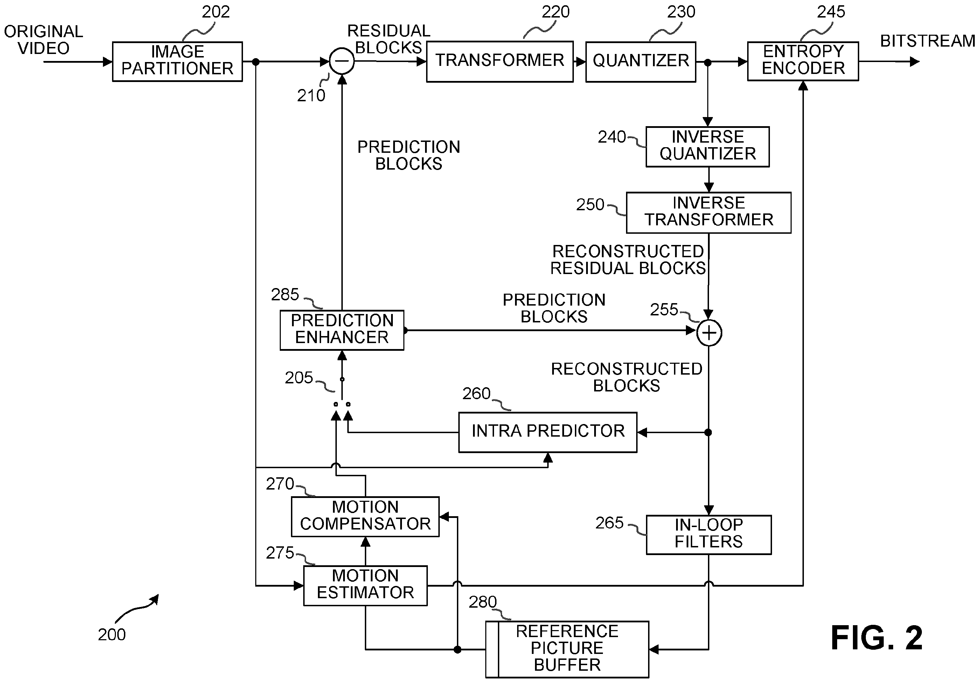

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

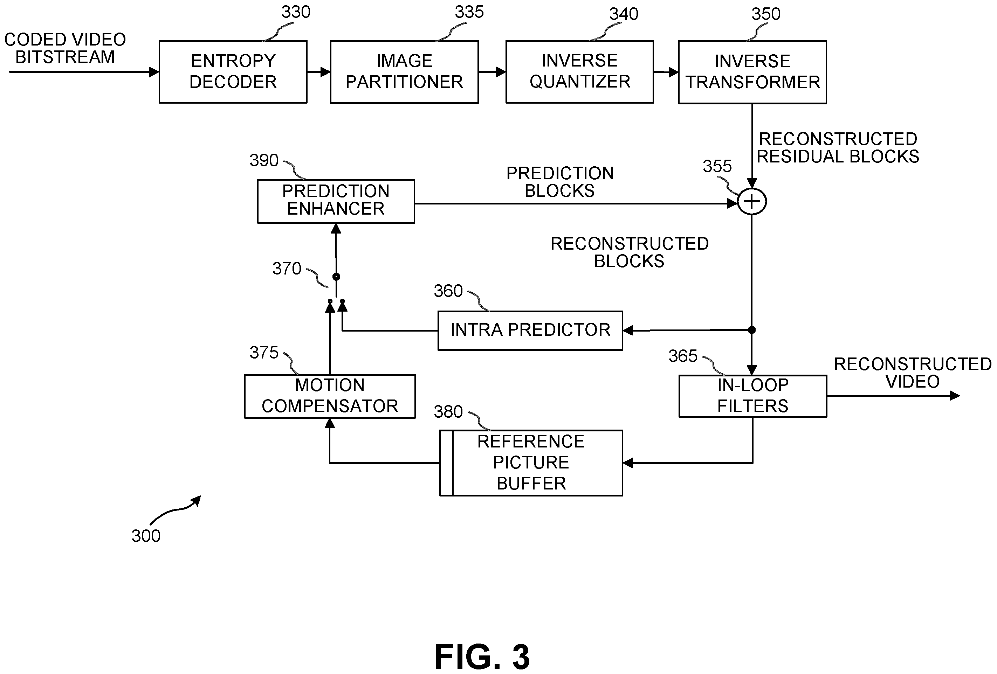

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

The encoding (e.g., or decoding) of data in avatar representation formats may be described herein. Signaling of a data location identifier (e.g., a link) to data encoded without using the avatar representation format, and/or the (e.g., additional) information that selects the relevant information within the data encoded in the identified data (e.g., the linked data) data may be described herein. A source of data indicated by a link (e.g., external data content indicated by a uniform resource identifier (URI) may be a file, a blob or a stream.

The current MPEG-I scene description (SD) format, using the MPEG_node_avatar extension may describe an avatar model. Applications may identify a mesh that represents an avatar and/or use the mesh accordingly. In examples, if the avatar is a (e.g., usual) human body mesh, an application may place it within a scene and/or allow the user to move it in the world. The AJIF format may encode an avatar model. The VRM format may be an (e.g., another) open format which may allow the encoding of the data of an avatar. One or more (e.g., alternative) formats may store the data of an avatar by using a proprietary encoding.

An example format may store data by following encoding rules (e.g., their own encoding rules). An example format may not allow the use of a different format to store parts of the avatar. In examples, one or more formats (e.g., like gITF or AJIF) may store data in a file or location outside of the main file (e.g., but use an encoding specific to the format). For example, glTF may be based on a main JSON file (e.g., avatar.json), which may point to a binary file with vertex coordinates (e.g., vertices.bin). The pointed file may be encoded using one of the supported formats defined by gITF. For example, it may not be possible to import the vertices of a .OBJ or .PLY file from a glTF file.

One the main advantage of allowing the encoding of avatar data in external formats may be to provide features that are not allowed by a representation format. For example, an avatar format may not provide (e.g., support) advanced materials, while existing scene description formats may provide (e.g., support) advanced materials. In examples, the avatar representation may link to an external file that defines an advanced material format (e.g., MaterialX or OpenPBR). An advantage of external links may be to bring application-dedicated data. For example, avatar data may be encoded using a format for (e.g., specific to) a rendering engine (e.g., unity or unreal), and/or then the avatar representation format may signals a link to the avatar data. If the rendering engine is the included as part of the external data, the rendering engine may be read by the engine.

Avatar interoperability may be described herein, where a user possesses an avatar encoded into one or more files (e.g., preferably gITF or AJIF). The avatar files may include (e.g., all the necessary) information for an application to implement the expected features. For example, the application may not provide (e.g., must not have to provide) extra data or make choices about possible setups.

The signaling of links to data encoded in a format that is not supported by the avatar representation format may be described herein. The signaling of (e.g., additional) data that indicates the parts of the external content the application may decode may be described herein. A list of formats (e.g., used and recommended (e.g., required) external formats) may be signaled, so an application may (e.g., easily) know which external formats may be used and/or recommended (e.g., required).

Signaling with AJIF may be described herein. RawData may be described herein. The RawData property may be extended by a type "scene." Table 1 is an example of the AJIF RawData properties.

**Table 1 - An example of the AJIF RawData properties**

| **Name** | **Type** | **Description** | **Required** |
|---|---|---|---|
| name | string | RawData name. | No |
| type | string | Data type: "dense", "sparse", "image", or "scene". | ü Yes |
| uri | string | Data content or reference to the data content (depends on type). | ü Yes |
| offset | integer | Offset in data content. | No, default 0 |
| byte Length | integer | Number of byte to use in data content. | No, default is content size |
| If type is "dense" { | | | |
| dims | integer [1-*] | Dimension of tensor | ü Yes |
| dtype | string | Type of values, like "f32", "f64", "i8", ... | ü Yes |
| } | | | |
| If type is "sparse" { | | | |
| dims | integer [1-*] | Dimension of tensor | ü Yes |
| count | integer | Number of a 2-tuple (index, value) in data content | ü Yes |
| dtype | string | Type of values, like "f32", "f64", "i8", ... | ü Yes |
| itype | string | Type of indices, like "i32", "i64", ... | ü Yes |
| } | | | |
| If type is "image" { | | | |
| mimeType | string | Image mime type, like "image/png" | No |
| dims | integer [2] | Image size | ü Yes |
| ctype | string | Type of colors, like "RGB", "YUV", ... | ü Yes |
| dtype | string | Type of color values, like "f32", "f64", "i8", ... | ü Yes |
| } | | | |
| If type is "tuples" { | | | |
| count | integer | Number of tuples | No |
| dtype | string | Type of tuple values, like "f32", "f64", "i8", ... | ü Yes |
| itype | string | Type of tuple sizes, like "i32", "i64", ... | ü Yes |
| } | | | |
| If type is "scene" { | | | |
| mimeType | string | Mesh mime type, like "model/gltf+json" | ü Yes |
| path | string | String indicating the mesh to import, such as "meshes/1". | No |
| includeChildren | boolean | Indicates if all the descendants of the referenced component must be | No, default True |
| | | decoded. | |
| } | | | |

A (e.g., new) "scene" raw data type may be provided. If/when the "type" is "scene", the "uri" property may point to, or include a 3D scene. Rules defined by AJIF may be followed for other types to gather the byte content (e.g., using the "byteLength" and/or "offset" properties if present, decoding base64 if "uri" is base64 encoded, and/or the like). The encoding format of the 3D scene may be indicated by the "mimeType" property. For example, if "mimeType" is "model/gltf+json", then the content pointed to, or stored in "uri" may be a 3D scene encoded using the glTF format.

In examples, if (e.g., all) the content of the scene is not included (e.g., required), the "path" property may indicate a part of the scene that the application may use. The "path" property may work in one or more (e.g., all) scene formats where data is structured (e.g., stored in a tree). In examples, the scene encoding format may be JSON. The "path" property may be a JSON path (e.g., "meshes/1"), which indicates the second mesh in the root meshes property. The path may use node names or ids. For example, "meshes/body" may indicate the first mesh in the "meshes" root property with the name or id "body". One or more (e.g., several) components may be indicated by the "path" property. For example, "meshes/0;meshes/1" may indicate a first and a second mesh (e.g., the two first meshes) of the "meshes" root property.

RawData items may be referenced (e.g., anywhere) in the AJIF (e.g., where RawData indices are expected). Depending on a location, (e.g., different) content may be expected. For example, if the "vertices" of a geometry in the AJIF references a RawData item of type "scene", the vertex coordinates of the external content may be decoded, and/or (e.g., all) remaining data may be ignored. In examples, if the linked data with the "uri" property is a glTF file, and/or if the "path" property indicates one of the meshes in the gITF, then (e.g., all) the vertex coordinates of (e.g., all) the primitives of the gITF mesh may be parsed and/or concatenated, and/or (e.g., all) the other data (e.g., face indices, uvs coords, weights, and/or the like) may be ignored. In examples, a component (e.g., another component) in the AJIF may refer to a RawData item. For example, a "uvs" property of a geometry item may reference a (e.g., the same) RawData item, and/or instead of considering the vertex coordinates, the application may decode the uvs coordinates and/or ignore the remaining data.

In examples, if one or more of the referenced components are a root, the "includeChildren" property may indicate whether (e.g., all) their children may be decoded. If concatenation is determined (e.g., required), then concatenation may be performed following a depth-first traversal of the node hierarchy.

Used and/or recommended (e.g., required) external formats may be described herein. At the root of the AJIF, one or more (e.g., two new) properties may be provided.

A first property may be "usedExternalFormats", which may be a list of mimeTypes that indicate one or more external formats the AJIF file may use. The application may not need to support these formats (e.g., the one or more external formats) to use the content of the AJIF file.

A second property may be "requiredExternalFormats", which may be a list of mimeTypes that indicate one or more external formats the AJIF file may use. The application may support these formats to use the content of the AJIF file.

Schemas examples may be described herein. An AJIF example may be described herein. Table 2 is an example of an avatar encoded using the AJIF format.

**Table 2: Example avatar encoding using an AJIF format**

| |
|---|
| ```
       {
         "asset": {
          "generator": "Interdigital R&D France, Video
 Lab, MetaVideo, Interactive Media, Immersive
          teleprescence",
          "version": "1.0"
         },
         "usedExternalFormats": ["model/gltf+son"],
         "requiredExternalFormats": ["model/gltf+json"],
         "data": [{
         "name": "all",
          "type": "scene",
         "mimeType": "model/gltf+json",
          "uri": "avatar.gltf",
         "path": "nodes/0",
         "includeChildren": true
         },
         {
         "name": "face",
          "type": "scene",
         "mimeType": "model/gltf+json",
          "uri": "avatar.gltf',
         "path": "meshes/0",
``` |
| ```
         "includeChildren": false
         },
         {
         "name": "jaw",
          "type": "scene",
         "mimeType": "model/gltf+json",
          "uri": "avatar.gltf",
         "path": "meshes/1",
         "includeChildren": false
         },
         {
         "name": "eye_left",
          "type": "scene",
         "mimeType": "model/gltf+json",
          "uri": "avatar.gltf",
         "path": "meshes/2",
         "includeChildren": false
         },
         {
         "name": "eye_right",
          "type": "scene",
         "mimeType": "model/gltf+json",
          "uri": "avatar.gltf",
         "path": "meshes/3",
         "includeChildren": false
         },
         {
         "name": "thorax",
          "type": "scene",
         "mimeType": "model/gltf+json",
          "uri": "avatar.gltf",
         "path": "meshes/4",
         "includeChildren": false
``` |
| ```
         },
         {
         "name": "arm_left",
          "type": "scene",
         "mimeType": "model/gltf+json",
          "uri": "avatar.gltf',
         "path": "meshes/5",
         "includeChildren": false
         },
         {
         "name": "arm_right",
          "type": "scene",
         "mimeType": "model/gltf+json",
          "uri": "avatar.gltf",
         "path": "meshes/6",
         "includeChildren": false
         },
         {
         "name": "abdomen",
          "type": "scene",
         "mimeType": "model/gltf+json",
          "uri": "avatar.gltf",
         "path": "meshes/7",
         "includeChildren": false
         },
         {
         "name": "pelvis",
          "type": "scene",
         "mimeType": "model/gltf+json",
          "uri": "avatar.gltf",
         "path": "meshes/8",
         "includeChildren": false
         },
``` |
| ```
         {
         "name": "leg_left",
          "type": "scene",
         "mimeType": "model/gltf+json",
          "uri": "avatar.gltf',
         "path": "meshes/9",
         "includeChildren": false
         },
         {
         "name": "leg_right",
          "type": "scene",
         "mimeType": "model/gltf+json",
          "uri": "avatar.gltf',
         "path": "meshes/10",
         "includeChildren": false
         }],
         "geometries": [{
          "faces": {
           "vertices": 1
          },
          "name": "face",
          "vertices": 0
         }, {
          "faces": {
           "vertices": 2
          },
          "name": "jaw",
          "vertices": 0
         }, {
          "faces": {
           "vertices": 3
          },
          "name": "eye_left",
``` |
| ```
          "vertices": 0
         }, {
          "faces": {
           "vertices": 4
          },
          "name": "eye_right",
          "vertices": 0
         }, {
          "faces": {
           "vertices": 5
          },
          "name": "thorax",
          "vertices": 0
         }, {
          "faces": {
           "vertices": 6
          },
          "name": "arm left",
          "vertices": 0
         }, {
          "faces": {
           "vertices": 7
          },
          "name": "arm_right",
          "vertices": 0
         }, {
          "faces": {
           "vertices": 8
          },
          "name": "abdomen",
          "vertices": 0
         }, {
          "faces": {
``` |
| ```
           "vertices": 9
          },
          "name": "pelvis",
          "vertices": 0
         }, {
          "faces": {
           "vertices": 10
          },
          "name": "leg_left",
          "vertices": 0
         }, {
          "faces": {
           "vertices": 11
          },
          "name": "leg_right",
          "vertices": 0
         }],
         "nodes": [{
          "children": [1, 11],
          "mapping": "full_body",
          "name": "full_body"
         }, {
          "children": [2, 7, 8, 9, 10],
          "mapping": "full_body/upper_body",
          "name": "upper_body"
         }, {
          "children": [3, 4, 5, 6],
          "mapping": "full_body/upper body/head",
          "name": "head"
         }, {
          "geometry": 0,
          "mapping": "full_body/upper body/head/face",
          "name": "face"
``` |
| ```
         }, {
          "geometry": 1,
          "mapping": "full_body/upper body/head/jaw",
          "name": "jaw"
         }, {
          "geometry": 2,
          "mapping": "full_body/upper_body/head/eye left",
          "name": "eye_left"
         }, {
          "geometry": 3,
          "mapping": "full body/upper_body/head/eye right",
          "name": "eye_right"
         }, {
          "geometry": 4,
          "mapping": "full_body/upper_body/thorax",
          "name": "thorax"
         }, {
          "geometry": 5,
          "mapping": "full_body/upper body/arm left",
          "name": "arm_left"
         }, {
          "geometry": 6,
          "mapping": "full_body/upper body/arm right",
          "name": "arm_right"
         }, {
          "geometry": 7,
          "mapping": "full_body/upper body/abdomen",
          "name": "abdomen"
         }, {
          "children": [12, 13, 14],
          "mapping": "full_body/lower_body",
          "name": "lower_body"
         }, {
``` |
| ```
          "geometry": 8,
          "mapping": "full_body/lower_body/pelvis",
          "name": "pelvis"
         }, {
          "geometry": 9,
          "mapping": "full_body/lower body/leg left",
          "name": "leg_left"
         }, {
          "geometry": 10,
          "mapping": "full_body/lower_body/leg right",
          "name": "leg_right"
         }],
         "lods": [{
           "mesh": 0
         }]
         }
``` |

Parsing may start with decoding the "usedExternalFormats" root property, which may indicate the format the AJIF file may use. If the application does not support one or more of the formats, the application may indicate, to the user, that (e.g., all) the features of the AJIF are not available. The "requiredExternalFormats" root property may be parsed, and/or if one or more of the formats listed are not supported by the application, the parsing process may end with an error.

The parsing may start with the decoding of the "lods" root, which may include a (e.g., single) level of details (LOD). The LOD may refer to the node of index 0 as the mesh of the avatar (e.g., "mesh" is 0). The node of index 0 may include a name "full_body" (e.g., "name" may be "full_body"). The node of index 0 may map to the full body of the avatar (e.g., "mapping" is "full_body") and/or include two child nodes of index 1 and 11 (e.g., "children" is [1, 11]). The nodes of index 1 and 11 may include name, mapping, and/or children. The parsing may continue walking the tree indicated by the "children" property of the walked nodes until a node without a "children" property is reached. In examples, a "geometry" property may refer to an item in the "geometries" root property.

In (e.g., all) geometries, the "vertices" property may include the first RawData item. The (e.g., first) RawData item may include the "scene" type as described herein. The referenced content may be included in (e.g., inside a) glTF file (e.g., "mimeType" may be "model/gltf+json") and/or it may be parsed from the file "avatar.gitf". The "path" property may indicate that the content to parse is in the first node of the "nodes" property of the glTF file. The "includeChildren" property may indicate that (e.g., all) the descendants may be parsed in a depth-first fashion. In examples, if the "vertices" property of a geometry references the RawData item, (e.g., only) the vertex coordinates may be decoded. If "includeChildren" is true, the vertex coordinates of (e.g., all) nodes may be concatenated following a depth-first traversal of the node hierarchy.

In (e.g., all) geometries, the "vertices" property of the "faces" property may refer to a different RawData item. A (e.g., each of these) RawData item(s) may at least one of: refer to the (e.g., same) "avatar.gltf" file, not include children (e.g., "includeChildren" is false), and/or the "path" property (e.g., of the RawData) may indicate a (e.g., different) mesh. For example, geometry of index 1 may include the first mesh of the "avatar.gltf file. In examples, (e.g., only) the vertex topology of the mesh may be parsed. For example, the "indices" property of a (e.g., each) primitive of the mesh may be parsed. For meshes with one or more (e.g., several) primitives, one or more (e.g., all) indices may be concatenated.

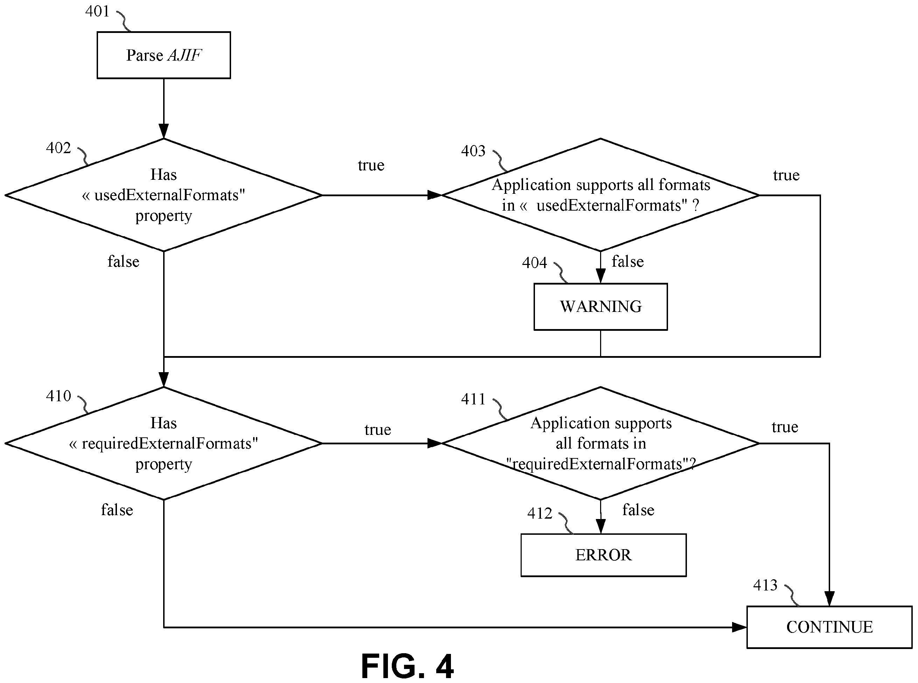

FIG. 4 is a flow diagram illustrating an example of the beginning of the parsing of an AJIF file. An example processing model may be described herein. FIG. 4 illustrates an example of the beginning of the parsing of an AJIF file.

The parsing of an AJIF file may start before parsing the "lods" root property (401).

If the "usedExternalFormats" property is present (402), the application may check if the application supports (e.g., all) the formats listed in "usedExternalFormats" (403). If the "usedExternalFormats" property is not present, the application may emit a warning (404). In examples, the application may display a message to the user indicating that a feature may not be available.

If the "requiredExternalFormats" property is present (410), the application may check if the application supports (e.g., all) the formats listed in "requiredExternalFormats" (411). If the "requireExternalFormats" property is not present, the parsing may fail (412).

The parsing of the AJIF file may continue (e.g., the parsing of the "lods" root property (413).

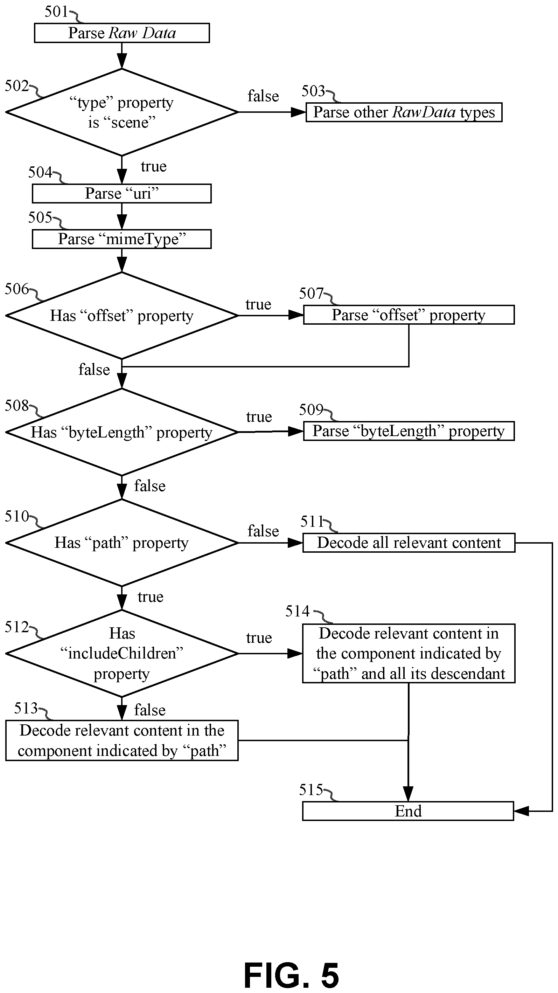

FIG. 5 is a flow diagram illustrating an example of the beginning of the parsing of an AJIF file. Parsing RawData may be described herein.

A RawData item may be parsed (501). A RawData item may be parsed if/when a component (e.g., another component) in the AJIF references the RawData item (e.g., creating a context). If the reference to the RawData item is the "vertices" property of a geometry which references the RawData item, the vertex coordinates may be expected.

The "type" property may be parsed and/or compared to "scene" (e.g., an error may be generated if "type" property is not present) (502).

If the "type" property is not "scene", then the other types may be parsed (e.g., as described herein) (503).

The "type" property may be "scene", and/or the "uri" property may be parsed (e.g., an error may be generated if the "uri" property is not present) (504).

The "mimeType" property may be parsed (e.g., an error may be generated if the "mimeType" property is not present) (505).

The "offset" property may be parsed, if present (506). If the "offset" property is not present, the offset may be 0 (507).

The "byteLength" property may be parsed, if present (508). If the "byteLength" property is not present, the byte length of the data content may be (e.g., all) the available data (509).

If the "path" property is not present (510), (e.g., all) the content relevant to the current context may be parsed (511). In examples, the byte content may be gathered as described by AJIF (e.g., using offset, byteLength, decoding base64 if "uri" is encoded using base64, or reading, downloading, and/or the like, if the content is indicated by "uri"). The byte content may be parsed following the format indicated by "mimeType", and/or based on a determination that data is researched (e.g., based on knowing that a specific kind of data is researched). For example, if vertex coordinates are expected, then the vertex coordinates data (e.g., data associated with the vertex coordinates kind of data) may be decoded and/or concatenated (e.g., in the case where one or more (e.g., several) components include the vertex coordinates). In examples, concatenation may be used, for example, if the referenced data is not in a (e.g., single) block (e.g., spread in many components). Concatenation may be used, for example, if the data is a hierarchy. The root node may be referenced by the RawData item, and/or the actual data may be in the descendants of this node. A node may include a set of child nodes (e.g., which themselves can have children, and so on). One or more (e.g., some) of these nodes may include the data (e.g., vertex coordinates).

If the "path" property is present (510), and/or the "includeChildren" property is not present (512), an operation similar to (511) may be performed, except that (e.g., only) the component indicated by "path" may be parsed.

If the "path" and/or "includeChildren" properties are present (510 or 512), an operation similar to (511) may be performed, except that the component indicated by "path" and/or (e.g., all) its descendants may be parsed. Descendants of a component may be components of a similar (e.g., the same) type referenced by the component. For example, if the type of the component indicated by "path" is a node, then a (e.g., any) node referenced by the component may be considered and/or (e.g., all) nodes of the referenced node may be considered (e.g., and so on).

Systems, methods, and/or instrumentalities described herein are to AJIF. For example, features, details, and/or the like as described herein, may be applied to MARF (e.g., with reference to an external file, with (e.g., additional) qualifiers pointing to a structural and/or functional subset of a file to be used for a current purpose). Features described herein may be used with, for example, an avatar file format(s).

In examples, one or more features described herein may be applicable to more than avatars (e.g. another file format may and/or may not be avatar related, and/or the file format may include slots for one or more (e.g., different) data items that are requested (e.g., needed) for one or more (e.g., different) purposes. In examples, for a given data item, the data internally to the file may be provided, and/or a link may be provided such that an external file may be used (e.g., in its entirety). In examples, a source of data indicated by a link (e.g., external data content indicated by a uniform resource identifier (URI)) may be a file, a binary large object (BLOB), or a stream. In examples, a link and/or a 'PATH' or another qualifier (e.g., that specifies a structural or functional subset of that linked file) may be provided, such that the subset is used and/or (e.g., all other) data in the file is be ignored.

In examples, general content file may not request (e.g., requiring any) avatar related context. In examples, a file may use JSON-specific context for the externally referenced file and/or for the interpretation of 'PATH'.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device, comprising:
a processor configured to:
determine that a data file comprises a plurality of data components;
determine a data component of the plurality of data components is associated with a first data format that an application does not support;
obtain a link to access external data content associated with a second data format that the application supports;
obtain external data of the external data content using the link; and
decode the external data.

2. A device, comprising:
a processor configured to:
determine that a data file comprises a plurality of data components;
determine a data component of the plurality of data components is associated with a first data format that an application does not support; and
send a link to access external data content associated with a second data format that the application supports.

3. The device of claim 1, wherein the external data content consists of the external data.

4. The device of claim 1, wherein the external data content comprises the external data, wherein the external data is a subset of data associated with the external data content, and wherein the processor is further configured to:
obtain a property indicating the external data that is to be decoded, wherein the external data is obtained based on the property.

5. The device of claim 4, wherein the external data is first external data of the external data content, and the processor is further configured to:
skip decoding of a second external data that is not indicated by the property, wherein the external data content comprises the second external data.

6. The device of claim 5, wherein the property is a path property associated with avatar data, wherein the avatar data is associated with a scene representation.

7. The device of claim 6, wherein the processor is further configured to parse an include-children property of the avatar representation to identify descendants associated with the external data indicated by the path property.

8. The device of claim 6, wherein the external data is in a JavaScript Object Notation (JSON) format, and the path property is parsed based on JSON parsing.

9. The device of claim 1, wherein the processor is further configured to receive a list of external formats that the application is required to support or a list of external formats that are usable by the application.

10. The device of claim 1 or claim 2, wherein the first data format or the second data format is a non-graphics library transmission format (gITF).

11. The device of claim 1 or claim 2, wherein the first data format is a glTF and the second data format is a non gITF, or the first data format is a non glTF and the second data format is a gITF.

12. The device of claim 1 or claim 2, wherein the data file is associated with an avatar representation, the data component is associated with a feature of the avatar representation, and the external data is decoded to generate the feature of the avatar representation.

13. A method, comprising:
determining that a data file comprises a plurality of data components;
determining a data component of the plurality of data components is associated with a first data format that an application does not support;
obtaining a link to access external data content associated with a second data format that the application supports;
obtaining external data of the external data content using the link; and
decoding the external data.

14. A method, comprising:
determining that a data file comprises a plurality of data components;
determining a data component of the plurality of data components is associated with a first data format that an application does not support; and
sending a link to access external data content associated with a second data format that the application supports.

15. The method of claim 13 or claim 14, wherein the external data content consists of the external data.
